# EUROPÄISCHE PATENTANMELDUNG

(11) **EP 4 144 501 A1**
(43) Veröffentlichungstag der Anmeldung: **08.03.2023**
(21) Anmeldenummer: 22190125.9
(22) Anmeldetag: 12.08.2022
(51) Int. Cl.: B29C 45/14, H05B 3/14, H05B 3/34

(54) **FORMTEIL UND VERFAHREN ZUR HERSTELLUNG DESSELBEN SOWIE VERWENDUNG**

(30) Priorität: 07.09.2021 DE 102021209847; 04.10.2021 DE 102021211135
(71) Anmelder: Benecke-Kaliko AG, 30419 Hannover (DE)
(72) Erfinder: Mikulski, Sebastian, 30165 Hannover (DE); Nassauer, Benjamin, 30165 Hannover (DE)
(74) Vertreter: Continental Corporation

(57) **Zusammenfassung**

Die Erfindung betrifft ein Formteil (1), umfassend ein die sichtbare Oberfläche bildendes Decksubstrat (12) und eine hinterspritzte oder hinterschäumte Trägerschicht (10) aus Kunststoffmaterial, wobei unterhalb des Decksubstrates (12) eine elektrisch leitende Funktionsschicht (11) vorgesehen ist, die mittels Elektroden kontaktierbar ist und von einer elektrisch nicht leitenden Trägerfolie und auf die Trägerfolie gedruckten und aushärtend getrockneten Leiterbahnen aus mindestens einer elektrisch leitfähigen Paste gebildet ist und die Trägerschicht (10) auf der dem Decksubstrat (12) abgewandten Seite der Funktionsschicht (11) hinterschäumt oder hinterspritzt und haftfest mit der Funktionsschicht (11) verbunden ist. Es wird ferner auch ein Verfahren zur Herstellung eines derartigen Formteils sowie dessen Verwendung angegeben.

## Beschreibung

Die Erfindung betrifft ein Formteil, umfassend ein die sichtbare Oberfläche bildendes Decksubstrat und eine hinterspritzte oder hinterschäumte Trägerschicht aus Kunststoffmaterial.

Formteile der eingangs genannten Art sind vielfältig bekannt und werden beispielsweise zur Ausbildung von Motorradsitzen und Motorradsitzbänken verwendet. Sofern die Formteile beheizt werden sollen, werden insbesondere bei Motorrädern standardmäßig Drahtheizungen eingesetzt, d. h. im Bereich des Decksubstrats oder darunter liegend werden Drahtgewebe eingearbeitet, die bei Beaufschlagung mit elektrischem Strom als Widerstandsheizung arbeiten und sich erwärmen. Des Weiteren kommen Heizfolien zum Einsatz, die jedoch sehr steif sind, was dem Komfort abträglich ist. Mit vergleichbaren Aufbauten werden auch Sensoren und andere elektrische Funktionselemente realisiert.

Diese vorgenannten Funktionselemente vermindern den Sitzkomfort und müssen durch eine zusätzliche Schaumschicht abgepolstert werden. Eine Schaumschicht zwischen dem Heizelement und der zu beheizenden Oberfläche vermindert jedoch die Heizleistung. Im Falle der Ausbildung von Sensoren kann sich eine solche Schaumschicht ebenfalls negativ auf das Messergebnis auswirken.

Es ist daher bereits vorgeschlagen worden, sehr dünne Drähte oder besonders weiche elektrische Funktionsfolien in das Decksubstrat zu integrieren. Dies führt jedoch zu Schwierigkeiten bei der Kontaktierung, insbesondere wenn das Decksubstrat ein komplexes Nähbild mit vielen einzelnen Stücken und Nähten aufweist.

Bei der Herstellung von Formteilen, die ein die sichtbare Oberfläche bildendes Decksubstrat und eine hinterspritzte oder hinterschäumte Trägerschicht aus Kunststoffmaterial aufweisen, gestaltet sich die Integration der vorangehend beschriebenen Funktionselemente schwierig. Beispielsweise kommt es beim Aufbringen eines solchen folienförmigen Funktionselements auf einen Bauteilträger zu einem erhöhten mechanischen Stress, insbesondere wenn das Funktionselement zuvor bereits mit einem Decksubstrat verbunden worden ist, welches eine Vielzahl von Nähten aufweist. Auch ist das elektrische Kontaktieren einer sehr dünnen und elastischen Funktionsfolie technisch komplex und fehleranfällig. Speziell bei stark beanspruchten Kontaktübergängen, wie Heizfunktionen mit hohen Strömen ist eine Kontaktierung der Funktionsfolie schwierig und zumeist kostenintensiv.

Aus der EP 3085198B1 ist ein elektrisch heizbares Flächenelement für einen Fahrzeugsitz bekannt, bei der auf eine elektrisch nicht leitende Trägerschicht eine elektrisch leitfähige und als Widerstandsheizung ausgebildete Beschichtung aufgebracht wird, die von einer elektrisch leitfähigen Paste gebildet wird, welche auf die Trägerschicht aufgedruckt wird. Dabei wird ein Druckmuster in Form einer Netz- oder Gitterstruktur verwendet, um ein universelles und als Rollenware bereitgestelltes Flächenelement zu erhalten, welches nach Zuschnitt und entsprechender Kontaktierung mittels Elektroden als Heizung einsetzbar wird. Dieses bekannte Flächenelement kann beispielsweise unterhalb eines aus einem Kunstleder gebildeten Decksubstrats angeordnet werden. Auch hierbei gestaltet sich allerdings die Anordnung der für die Kontaktierung benötigten Elektroden problematisch und erfordert gestalterisch unerwünschte Beschränkungen insbesondere in Bezug auf Nahtverläufe des Bezugs. Eine Anwendung im Rahmen der Herstellung von hinterschäumten Formteilen ist nicht angesprochen.

Aufgabe der Erfindung ist es, ein Formteil der eingangs genannten Art vorzuschlagen, welches die Nachteile des Standes der Technik überwindet.

Zur Lösung der gestellten Aufgabe wird erfindungsgemäß die Ausgestaltung eines Formteils gemäß den kennzeichnenden Merkmalen des Patentanspruches 1 vorgeschlagen.

Ein Verfahren zur Herstellung eines solchen Formteiles ist Gegenstand des Patentanspruchs 7.

Vorteilhafte Ausgestaltungen und Weiterbildungen der Erfindung sind Gegenstand der abhängigen Ansprüche.

Erfindungsgemäß wird vorgeschlagen, dass unterhalb des Decksubstrates eine elektrisch leitende Funktionsschicht vorgesehen ist, die mittels Elektroden kontaktierbar ist und von einer elektrisch nicht leitenden Trägerfolie und auf die Trägerfolie gedruckten und aushärtend getrockneten Leiterbahnen aus mindestens einer elektrisch leitfähigen Paste gebildet ist und die Trägerschicht auf der dem Decksubstrat abgewandten Seite der Funktionsschicht hinterschäumt oder hinterspritzt und haftfest mit der Funktionsschicht verbunden ist.

Erfindungsgemäß wird somit die Funktionsschicht von dem Decksubstrat entkoppelt, wodurch die Kontaktierung unabhängig von der Anordnung und dem Verlauf der Nähte erheblich vereinfacht wird. In Anpassung an den jeweils individuell vorliegenden Korpus wird eine dazu passende elektrisch leitende Funktionsschicht mit angepasstem Verlauf der Leiterbahnen auf eine nichtleitende Trägerfolie gedruckt, wozu eine an sich bekannte, am Markt verfügbare leitfähige Paste verarbeitet wird. Nachdem die gedruckten Leiterbahnen aus der elektrisch leitfähigen Paste durch Trocknen ausgehärtet sind, wird die solchermaßen gebildete elektrisch leitende Funktionsschicht in ein geeignetes Formwerkzeug eingelegt und mit der Trägerschicht aus Kunststoffmaterial hinterspritzt oder hinterschäumt, wodurch eine haftfeste Verbindung zwischen der erstellten Trägerschicht und der darauf befindlichen Funktionsschicht enthaltend die gedruckten Leiterbahnen hergestellt wird.

Anschließend kann die Trägerschicht mit der haftfest darauf aufgebrachten elektrisch leitenden Funktionsschicht in an sich bekannter Weise mit dem Decksubstrat überzogen werden, welches die Trägerschicht und die aufgebrachte Funktionsschicht sichtseitig überdeckt.

Im Falle der Ausbildung der elektrisch leitenden Funktionsschicht als Heizelement wird somit das darüber liegende und als Bezug dienende Decksubstrat unmittelbar von der Funktionsschicht beheizt. Damit entsteht die Heizwirkung dicht unter der Oberfläche, was zu kurzen Aufheizzeiten bei geringem Energieeinsatz führt. Sofern die Funktionsschicht als Sensor ausgebildet ist, liegt ebenfalls eine unmittelbare Anlage der Funktionsschicht am Decksubstrat vor, wodurch Verfälschungen der Messergebnisse vermieden werden. Da eine solche Funktionsschicht sehr dünn und elastisch ausgebildet ist, wird kein zusätzlicher Schaum zwischen Funktionsschicht und Decksubstrat benötigt.

Das Layout bzw. die Topographie der gedruckten Leiterbahnen kann erfindungsgemäß exakt an die jeweilige Aufgabenstellung, zum Beispiel Heizung oder Sensor und die vorhandene Kontur und Fläche der Trägerschicht angepasst werden. Hingegen braucht das verwendete Decksubstrat und insbesondere dessen Nahtverläufe nicht berücksichtigt zu werden, dieses kann vielmehr in weiten Grenzen frei gestaltet werden.

Nach einem Vorschlag der Erfindung werden die Elektroden zur Kontaktierung der elektrisch leitenden Funktionsschicht ebenfalls auf die Trägerfolie gedruckt und von einer aushärtend getrockneten elektrisch leitfähigen Paste gebildet. Diese können bei Festlegung des Druckbildes für die Leiterbahnen an einer geeigneten Position zum Beispiel im nicht sichtbaren Bereich angeordnet und unmittelbar im Druckbild berücksichtigt werden.

Die leitfähige Paste kann nach einem Vorschlag der Erfindung elektrisch leitfähige Partikel in einer Polymermatrix umfassen, wobei die leitfähige Paste darüber hinaus für die Ausgestaltung als Heizelement insbesondere Graphitpartikel oder andere schwach leitfähige Partikel und für die Ausbildung der hoch leitfähigen Elektroden oder zur Ausbildung von Sensoren Silberpartikel o. ä. sehr leitfähige Partikel oder Strukturen enthalten kann.

Es kann vorgesehen sein, die leitfähigen Pasten einschichtig oder ggf. auch mehrschichtig auf die Trägerfolie zu drucken, um die gewünschten Leiterbahnen zu erhalten. Beispielsweise kann eine erste Schicht aus einer hoch leitfähigen Paste auf die Trägerfolie aufgedruckt werden, um Leiterbahnen für die Kontaktierung mit Anschlussleitungen und für die Zuleitung zu Widerstandsheizelementen auszubilden. Auf diese Schicht kann sodann z.B. eine weitere Schicht aus einer für Heizanwendungen geeigneten Paste aufgedruckt werden, um ein oder mehrere Widerstandsheizelemente zu bilden. Das Druckbild selbst ist dabei stets frei wählbar und vorzugsweise streifen- bzw. linienförmig.

Die Trägerfolie kann aus geeigneten Kunststoffen, z.B. Polyolefinen, Polyester oder Polyurethan bestehen.

Die Pasten können durch geeignete Druckverfahren, wie z.B. Siebdruck, auf die Trägerfolie aufgebracht werden. Die Schichtstärke der getrockneten Paste sollte vorzugsweise im Bereich 5-30 µm liegen.

Nach einem Vorschlag der Erfindung ist auf der der Funktionsschicht abgewandten Seite der Trägerschicht ein Bauteilträger vorgesehen, der als Form-Gegenstück gemeinsam mit der Funktionsschicht in das Schäumwerkzeug eingelegt wird. Zwischen der in das Schäumwerkzeug eingelegten Funktionsschicht und dem ebenfalls im Schäumwerkzeug positionierten Bauteilträger wird zunächst ein Freiraum ausgebildet, der mit der Trägerschicht aus Kunststoffmaterial hinterspritzt oder hinterschäumt wird. Auf diese Weise wird die Trägerschicht einerseits mit der Funktionsschicht und andererseits auch mit dem Bauteilträger haftfest verbunden. Ein hoher einmaliger mechanischer Stress beim Aufbringen auf einen später bereitgestellten Bauteilträger in der Produktion entfällt somit erfindungsgemäß.

Das erfindungsgemäße Formteil kann verschiedenste elektrisch leitende Funktionsschichten umfassen, wobei insbesondere mittels der Leiterbahnen ein Heizelement, ein Belegungs- oder Annäherungssensor, ein Temperatursensor, ein Feuchtigkeitssensor, ein Dehnungssensor, ein Herzfrequenzsensor und/oder eine Antenne ausgebildet werden kann.

Da erfindungsgemäß die elektrisch leitende Funktionsschicht fest mit der Trägerschicht und gegebenenfalls dem Bauteilträger verbunden und in Form gebracht wird, kann eine elektrische Kontaktierung direkt auf oder mit dem Bauteilträger realisiert werden. Durch die hinterspritzte oder hinterschäumte Trägerschicht wird die elektrisch leitende Funktionsschicht gemäß der Erfindung mechanisch stabilisiert und geschützt. Sofern die elektrisch leitende Funktionsschicht als Heizelement dient, verbessert die geschäumte Trägerschicht zudem die thermische Effizienz.

Das erfindungsgemäße Verfahren zur Herstellung eines Formteils mit einem die sichtseitige Oberfläche bildenden Decksubstrat und einer hinterspritzten oder hinterschäumten Trägerschicht aus Kunststoffmaterial zeichnet sich dadurch aus, dass eine elektrisch leitende Funktionsschicht bereitgestellt wird, die mittels Elektroden kontaktiert wird und durch Bedrucken einer elektrisch nicht leitenden Trägerfolie mit auf die Trägerfolie gedruckten und aushärtend getrockneten Leiterbahnen aus mindestens einer elektrisch leitfähigen Paste gebildet wird und die Funktionsschicht in ein Schäumwerkzeug eingelegt und mit der Trägerschicht hinterschäumt oder hinterspritzt und haftfest verbunden wird und auf den Verbund aus Funktionsschicht und Trägerschicht sichtseitig das Decksubstrat aufgebracht wird.

Nach einem Vorschlag der Erfindung wird dabei die Funktionsschicht vor und/oder während des Hinterschäumens oder Hinterspritzens mittels Unterdruck im Schäumwerkzeug fixiert und/oder im Schäumwerkzeug vorgewärmt. Eine solche Vorwärmung erleichtert die plastische Verformung gemäß der Kontur des verwendeten Schäumwerkzeuges.

Nach einem weiteren Vorschlag der Erfindung kann als Form-Gegenstück zum Schäumwerkzeug ein für das Formteil vorgesehener Bauteilträger ebenfalls in das Schäumwerkzeug eingelegt werden, und zwar unter Belassung eines Freiraumes zur Funktionsschicht. In diesen Freiraum wird sodann die Trägerschicht durch Hinterspritzen oder Hinterschäumen eingebracht, sodass Funktionsschicht, Trägerschicht und Bauteilträger haftfest miteinander zu einem entsprechenden Formteil verbunden werden, welches nachfolgend durch Aufbringen des Decksubstrats, vorzugsweise in einem nachgelagerten Schritt außerhalb des Schäumwerkzeuges komplettiert wird.

Das vorangehend erläuterte Formteil kann insbesondere als Fahrzeugsitzbauteil, beispielsweise als Motorradsitz, als Sitz für Pkw und Lkw, als Automobilinnenraumteil, als Sitz oder Sitz Bauteil für Luftfahrzeuge, öffentliche Verkehrsmittel, Schiffe, öffentliche Einrichtungen, als Möbelbauteil zum Beispiel für Polstermöbel oder Massageliegen oder auch für Sportgeräte verwendet werden und je nach Ausgestaltung der Funktionsschicht elektrisch beheizbar oder mit gewünschten Sensoren versehen sein.

Weitere Einzelheiten der Erfindung werden nachfolgend anhand der ein Ausführungsbeispiel darstellenden Zeichnung erläutert.

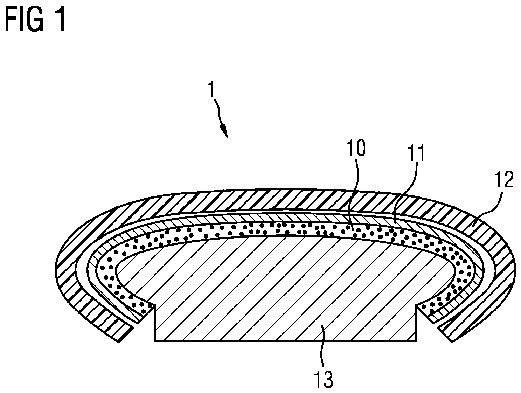

Die einzige Figur zeigt dabei in einer schematisierten, vereinfachten Darstellung ein Formteil 1 im Querschnitt, beispielsweise eine Motorradsitzbank. Das Formteil 1 umfasst einen Bauteilträger 13, auf den oberseitig unter Belassung eines Abstandes oder Freiraumes eine nachfolgend noch näher erläuterte elektrische Funktionsschicht 11 von folienförmiger Gestalt aufgebracht ist. Der Freiraum zwischen Bauteilträger 13 und Funktionsschicht 11 ist von einer Trägerschicht 10 aus einem geeigneten Kunststoffmaterial aufgefüllt, die durch Hinterspritzen oder Hinterschäumen der Funktionsschicht 11 in einem Schäumwerkzeug in der nachfolgend noch beschriebenen Weise eingebracht worden ist. Die Trägerschicht 10 ist dabei einerseits haftfest mit dem Bauteilträger 13 und andererseits mit der elektrischen Funktionsschicht 11 verbunden. Als sichtseitige Abdeckung ist oberhalb der elektrischen Funktionsschicht 11 ein Decksubstrat 12 aufgebracht, welches nach Art eines Bezuges die sichtbare Oberfläche des Formteiles 1 bildet und ohne flächige haftfeste Verbindung zur elektrischen Funktionsschicht 11 über diese, die Trägerschicht 10 und den Bauteilträger 13 gespannt ist. Bei diesem Decksubstrat 12 kann es sich um ein komplexes Flächengebilde, beispielsweise ein Kunstleder mit einer Vielzahl von Nähten handeln, die entweder nur optische Funktion erfüllen oder den Bezug aus einer Vielzahl von Einzelteilen zusammenfügen.

In anderen Ausführungsformen kann eine bereichsweise oder vollflächige haftfeste Verbindung zwischen dem Decksubstrat 12 und der elektrischen Funktionsschicht vorgesehen sein.

Die zwischen Decksubstrat 12 und Trägerschicht 10 vorgesehene elektrisch leitende Funktionsschicht 11 ist in nicht näher dargestellter Weise von einer elektrisch nichtleitenden Trägerfolie und auf diese elektrisch nichtleitende Trägerfolie aufgedruckten elektrisch leitfähigen Leiterbahnen gebildet. Die Leiterbahnen werden von mindestens einer elektrisch leitfähigen Paste gebildet, die auf die Trägerfolie nach Maßgabe eines den Verlauf der Leiterbahnen wiedergebenden Druckbildes aufgedruckt und durch Trocknen ausgehärtet worden sind.

Wesentlich ist es, dass die elektrisch leitende Funktionsschicht 11 haftfest auf die Trägerschicht 10 und den Bauteilträger 13 aufgebracht ist. Dies wird durch Herstellung in einem nicht dargestellten Schäumwerkzeug sichergestellt. Dabei wird in einem ersten Schritt nach Maßgabe des gewünschten Layouts bzw. der Topographie der Leiterbahnen in Abhängigkeit von der gewünschten Funktion und den baulichen Gegebenheiten ein entsprechender Zuschnitt der elektrisch nichtleitenden Trägerfolie der Funktionsschicht 11 mit der mindestens einen elektrisch leitfähigen Paste bedruckt, die zur Ausbildung der gewünschten Leiterbahnen anschließend auf der Trägerfolie aushärtend getrocknet werden. Nachdem die elektrisch leitende Funktionsschicht 11 solchermaßen vorgefertigt worden ist, wird sie in das Schäumwerkzeug zur Herstellung des Formteiles eingelegt, gegebenenfalls unter Fixierung an die Werkzeugoberfläche mittels Unterdruck. Zusätzlich kann die Funktionsschicht 11 auch erwärmt werden, um die plastische Verformung gemäß der Kontur des Schäumwerkzeuges zu unterstützen.

Sodann wird ein bereitgestellter Bauteilträger 13 ebenfalls in das Schäumwerkzeug eingelegt, wobei zwischen Bauteilträger 13 und Funktionsschicht ein Freiraum verbleibt. Nach Schließen des Schäumwerkzeuges wird sodann dieser Freiraum durch Hinterspritzen oder Hinterschäumen mit einem geeigneten Kunststoffmaterial aufgefüllt und die entsprechende Trägerschicht 10 aus dem Kunststoffmaterial ausgebildet, die einerseits mit dem Bauteilträger 13 und andererseits mit der Funktionsschicht 11 haftfest verbunden ist.

Die solchermaßen gebildete Einheit aus Bauteilträger 13, Trägerschicht 10 und haftfest aufgebrachter elektrisch leitender Funktionsschicht 11 wird anschließend aus dem Schäumwerkzeug entnommen und vom Decksubstrat 12 sichtseitig überzogen, welches jedoch keine vollflächige Verbindung zu der Funktionsschicht 11 aufweist, sondern diese lediglich sichtseitig einhüllt. Insofern braucht auf den Verlauf der Nähte im Decksubstrat 12 bei der Gestaltung der elektrisch leitenden Funktionsschicht 11 keine Rücksicht genommen zu werden.

Beispielsweise im Bereich der nicht sichtbaren Seitenränder der Funktionsschicht 11 können Elektroden für die elektrische Kontaktierung der Leiterbahnen vorgesehen sein, die ebenfalls auf die Trägerfolie gedruckt und von einer geeigneten elektrisch leitfähigen Paste gebildet sind.

Mit einem solchen Aufbau ist es möglich, dass Decksubstrat 12 des Formteils 1 elektrisch zu beheizen, wozu die Leiterbahnen der elektrisch leitenden Funktionsschicht 11 insbesondere aus einer elektrisch leitfähigen Paste enthaltend Graphitpartikel oder andere schwach leitfähige Partikel gebildet werden, die einen entsprechend hohen Widerstand aufweisen und bei Stromdurchfluss mit entsprechender Temperaturerhöhung reagieren. Die zur Kontaktierung verwendeten Elektroden können hingegen aus einer leitfähigen Paste enthaltend Silberpartikel o. ä. hoch leitfähigen Metalle oder Strukturen gebildet werden.

In gleicher Weise ist es auch möglich, statt eines Heizelements aus der elektrisch leitenden Funktionsschicht 11 einen Sensor zu erstellen, beispielsweise einen Belegungs- oder Annäherungssensor, einen Temperatursensor, einen Feuchtigkeitssensor, einen Dehnungssensor, einen Herzfrequenzsensor und/oder eine Antenne.

Da die Gestaltung und insbesondere der Nahtverlauf im Decksubstrat 12 bei der Anordnung der Leiterbahnen der Funktionsschicht 11 nicht berücksichtigt werden muss, kann die Topographie der Leiterbahnen und der Elektroden aus der elektrisch leitfähigen Paste in Anpassung an den gewählten Einsatzzweck und die vorhandene Fläche und Kontur des Formteiles nahezu frei gewählt und optimiert werden und als Druckmuster der elektrisch leitfähigen Paste auf die Trägerfolie übertragen und auf der Trägerschicht und gegebenenfalls dem Bauteilträger fixiert werden, bevor das Decksubstrat angebracht wird.

### Bezugszeichenliste:

- 1: Formteil
- 10: Trägerschicht
- 11: Funktionsschicht
- 12: Decksubstrat
- 13: Bauteilträger

## Patentansprüche

1. Formteil (1), umfassend ein die sichtbare Oberfläche bildendes Decksubstrat (12) und eine hinterspritzte oder hinterschäumte Trägerschicht (10) aus Kunststoffmaterial, **dadurch gekennzeichnet, dass** unterhalb des Decksubstrates (12) eine elektrisch leitende Funktionsschicht (11) vorgesehen ist, die mittels Elektroden kontaktierbar ist und von einer elektrisch nicht leitenden Trägerfolie und auf die Trägerfolie gedruckten und aushärtend getrockneten Leiterbahnen aus mindestens einer elektrisch leitfähigen Paste gebildet ist und die Trägerschicht (10) auf der dem Decksubstrat (12) abgewandten Seite der Funktionsschicht (11) hinterschäumt oder hinterspritzt und haftfest mit der Funktionsschicht (11) verbunden ist.

2. Formteil (1) nach Anspruch 1, **dadurch gekennzeichnet, dass** die Elektroden ebenfalls auf die Trägerfolie gedruckt und von einer aushärtend getrockneten elektrisch leitfähigen Paste gebildet sind.

3. Formteil (1) nach Anspruch 1 oder 2, **dadurch gekennzeichnet, dass** die leitfähige Paste elektrisch leitfähige Partikel in einer Polymermatrix umfasst.

4. Formteil (1) nach einem der Ansprüche 1 bis 3, **dadurch gekennzeichnet, dass** die leitfähige Paste Graphitpartikel und/oder Silberpartikel enthält.

5. Formteil (1) nach einem der Ansprüche 1 bis 4, **dadurch gekennzeichnet, dass** auf der der Funktionsschicht (11) abgewandten Seite der Trägerschicht (10) ein Bauteilträger (13) vorgesehen und mit der Trägerschicht (10) verbunden ist.

6. Formteil (1) nach einem der Ansprüche 1 bis 5, **dadurch gekennzeichnet, dass** die Funktionsschicht (11) als Heizelement, Belegungs- oder Annäherungssensor, Temperatursensor, Feuchtigkeitssensor, Dehnungssensor, Herzfrequenzsensor und/oder als Antenne ausgebildet ist.

7. Verfahren zur Herstellung eines Formteils (1), welches ein die sichtseitige Oberfläche bildendes Decksubstrat (12) und eine hinterspritzte oder hinterschäumte Trägerschicht (10) aus Kunststoffmaterial aufweist, **dadurch gekennzeichnet, dass** eine elektrisch leitende Funktionsschicht (11) bereitgestellt wird, die mittels Elektroden kontaktiert wird und durch Bedrucken einer elektrisch nicht leitenden Trägerfolie mit auf die Trägerfolie gedruckten und aushärtend getrockneten Leiterbahnen aus mindestens einer elektrisch leitfähigen Paste gebildet wird und die Funktionsschicht (11) in ein Schäumwerkzeug eingelegt und mit der Trägerschicht (10) hinterschäumt oder hinterspritzt und haftfest verbunden wird und auf den Verbund aus Funktionsschicht (11) und Trägerschicht (10) sichtseitig das Decksubstrat (12) aufgebracht wird.

8. Verfahren nach Anspruch 7, **dadurch gekennzeichnet, dass** die Funktionsschicht (11) vor und/oder während des Hinterschäumens oder Hinterspritzens mittels Unterdruck im Schäumwerkzeug fixiert und/oder im Schäumwerkzeug vorgewärmt wird.

9. Verfahren nach Anspruch 7 oder 8, **dadurch gekennzeichnet, dass** in das Schäumwerkzeug ein Bauteilträger (13) unter Belassung eines Freiraumes zur Funktionsschicht (11) eingebracht und in den Freiraum die Trägerschicht (10) durch Hinterspritzen oder Hinterschäumen eingebracht wird.

10. Verfahren nach einem der Ansprüche 7 bis 9, **dadurch gekennzeichnet, dass** die Funktionsschicht (11) zur Ausbildung eines Heizelements, eines Belegungs- oder Annäherungssensors, eines Temperatursensors, eines Feuchtigkeitssensors, eines Dehnungssensors, eines Herzfrequenzsensors und/oder einer Antenne ausgebildet wird.

11. Verwendung eines Formteiles (1) nach einem der vorangehenden Ansprüche als Fahrzeugsitzbauteil, als Automobilinnenraumteil, als Möbelbauteil oder als Bauteil eines Sportgeräts.
